# EUROPEAN PATENT SPECIFICATION

(11) **EP 2 627 551 B1**
(45) Date of publication and mention of the grant of the patent: **28.09.2016**
(21) Application number: 11833496.0
(22) Date of filing: 14.10.2011
(51) Int. Cl.: B29C 43/20, B29C 45/16, B29C 43/14, B32B 38/00, B32B 38/12, B29C 45/00, B29C 59/00, B60R 21/2165, B29C 43/02, B29L 31/30, B60R 21/205

(54) **INSTRUMENT PANEL WITH INTEGRAL HIDDEN DOOR COVER AND METHOD OF MANUFACTURE THEREOF**
INSTRUMENTENTAFEL MIT EINER INTEGRIERTEN VERSTECKTEN TÜRABDECKUNG UND HERSTELLUNGSVERFAHREN DAFÜR
TABLEAU DE BORD AYANT UN CAPOT DE PORTE INTÉGRÉ ET CACHÉ ET PROCÉDÉ DE FABRICATION DE CE DERNIER

(30) Priority: 14.10.2010 US 393319 P
(43) Date of publication of application: 21.08.2013
(73) Proprietor: Inteva Products LLC, Troy, Michigan 48084 (US)
(72) Inventor: WOLFE, Mark, Centerville, Ohio 45458 (US); OXNER, John, Troy, Michigan 48084 (US); WENZEL, Edward, Troy, Michigan 48098 (US)
(74) Representative: Delorme, Nicolas
(86) International application number: PCT/US2011/056381
(87) International publication number: WO 2012/051543

(56) References cited:
- DE-A1- 10 022 648
- FR-A1- 2 923 759
- JP-A- 2006 082 791
- US-A1- 2004 164 531
- US-A1- 2005 200 049
- US-A1- 2006 267 314
- US-A1- 2008 131 643
- US-A1- 2010 102 540
- US-B2- 6 692 019
- US-B2- 7 000 942
- US-B2- 7 168 731

## Description

### CROSS REFERECNE TO RELATED APPLICAITONS

This application claims the benefit of U.S. Provisional Patent Application Serial No. 61/393,319 filed October 14, 2010, the contents of which are incorporated herein by reference thereto.

### BACKGROUND

The present invention relates generally to an instrument panel used in a vehicle having an inflatable cushion or airbag module, and more particularly to an instrument panel cover having an integral hidden door and the method of manufacture thereof.

Vehicles are now equipped with some type of inflatable cushions or airbag modules and other vehicle components have been modified to accommodate the use of such systems. For example, most passenger side airbag modules are disposed within and behind an instrument panel which extends across at least a portion of the width of a vehicle compartment. During assembly and/or manufacture, an instrument panel in a vehicle having a passenger side airbag module requires a discrete door which covers an opening formed in the instrument panel for the inflatable cushion to deploy through upon actuation of the airbag module. This separate door is designed to open in response to the force of the expanding inflatable cushion. In other words as the pressure in the inflatable cushion increases, the volume of the cushion increases and applies a force to a portion of the door wherein the door selectively separates from the remaining portion of the instrument panel to permit the inflatable cushion to deploy therethrough.

Typically, the manufacture of the instrument panel involves forming an opening in the instrument panel adjacent to the location of the airbag module. The opening is then covered by a separate door which is secured to the instrument panel and faces the occupants of the vehicle. Thus, the instrument panel itself is manufactured in view of the shape and size of the door and the door is separately manufactured and installed in the instrument panel using known techniques. However, the outer periphery of such a door is clearly visible to the vehicle occupant and may create an unpleasing appearance to the instrument panel.

Instrument panel retainers, uppers and/or partial uppers that are clad with a skin/foam bi-laminate typically contain a hidden passenger airbag door in lieu of a separate door/airbag system assembly for aesthetic reasons. In the case where the skin/foam cladding is in the form of a bi-laminate it is vacuum formed directly to the instrument panel retainer or post wrapped around the retainer and scoring of the tear seam is commonly achieved via a CO2 laser which penetrates through the retainer, foam and partially into the skin via a single pass.

The score depth consistency is highly dependent on the ability of the skin laser to absorb the laser light in a consistent fashion along the entire length of the tear seam. Score depth consistency at the desired penetration depth is required to achieve a desired "breakthrough force" to ensure proper airbag deployment as well as provide an adequate resistive force to external loads applied to the door from the A-side or show surface of the skin layer during normal vehicle operation. Visual readthrough of the seam on the top side or show surface of the skin layer is undesirable and highly dependent upon the intensity of the power required of the laser to "burn through" the retainer substrate and foam layers in addition to the absorption.

Consistent absorption of laser light in the skin layer of the trilaminate construction can be difficult, particularly with olefin based skin (compact sheet). Readthrough of the laser-scored seam can also be an issue and is highly dependent on the materials of construction.

FR 2 923 759 shows a method for fabricating a four-layered instrument panel for vehicles with an airbag door that cannot be seen by the passengers of the vehicle. The door is created by cutting a groove into the layer structure of the instrument panel, wherein the groove is created in two subsequent cutting steps. The second cutting step is carried out in the opening created by the first cutting step.

DE 100 22 648 A1 shows a method for creating a tear seam in a three-layered structure of an instrument panel with single-layered supporting structure and a two-layered decorative composite. The tear seam is created by milling a groove into the supporting structure and then cutting through the groove into the decorative composite without compromising the outer, visible surface of the decorative composite.

JP 2006 082791 A shows a manufacturing method of an airbag door integrated into an instrument panel. The instrument panel consists of a three-layered composite that is cut in a single step to create a weakening acting as a tear line for the airbag door.

US 2008/0131643 A1 shows a method for the introduction of at least one locally limited weakening into a decorative composite by use of a laser beam. The weakening is created by forming a plurality of blind holes into the decorative composite wherein the blind holes are created in a two step process.

Due to ongoing desires for improving the aesthetics of the passenger compartment, it is desirable to provide aesthetically pleasing, functional alternatives to the conventional instrument panels having a separate door covering the airbag module.

### SUMMARY OF THE INVENTION

According to an embodiment of the invention, a method according to claim 1 of forming a hidden, integral airbag door in an instrument panel is provided.

### BRIEF DESCRIPTION OF THE DRAWINGS

The present invention will now be described, by way of example only, with reference to the accompanying drawings in which:
FIG. 1 is a partial cross sectional view of a vehicle interior;
FIG. 2 is a partial perspective view of a vehicle interior;
FIG. 3 is a view along lines 3-3 of Figure 2;
FIGS. 4 and 5 are schematic illustrations of a method of forming an instrument panel representing an alternative to embodiments of the present invention; and

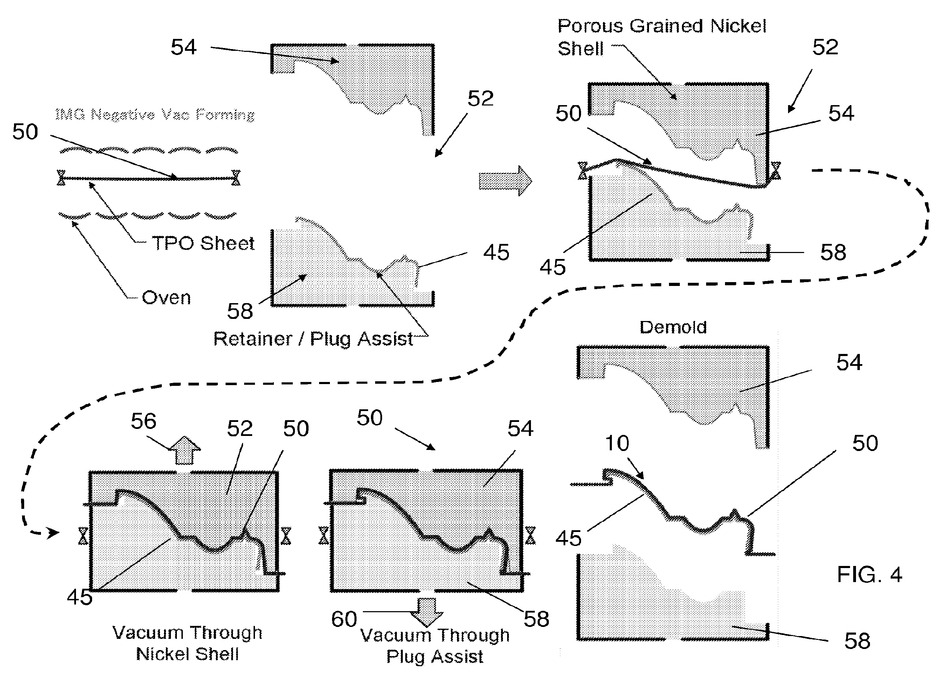

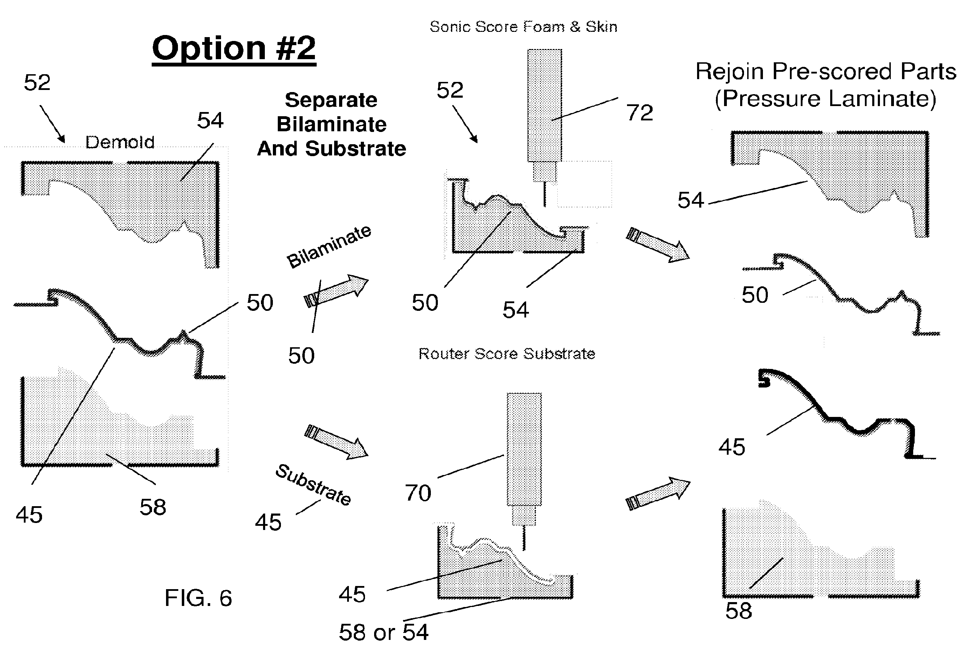

FIGS. 4 and 6 are schematic illustrations of a method of forming an instrument panel in accordance with the exemplary embodiment of the present invention.

The above-described and other features and advantages of the present application will be appreciated and understood by those skilled in the art from the following detailed description, drawings, and appended claims.

### DETAILED DESCRIPTION OF EXEMPALRY EMBODIMENTS

In accordance with exemplary embodiments of the present invention an airbag module cover/instrument panel with a deployable door and invisible tear seam is provided. The deployable door is formed via a multi-step process wherein a substrate layer is first formed during a molding process (e.g., injection molding or other equivalent process) and wherein a separately formed bi-laminate layer comprising an intermediary foam layer and an outer layer is applied to the substrate and then the tear seam is formed via a scoring process wherein the bi-laminate layer and the substrate are scored separately.

In one embodiment, an ultrasonic cutting device is used to provide the tear seam wherein, the tear seam formed by the score is not visually viewable from the outer or show surface of the cover/instrument panel.

The cover/instrument panel will provide a means for covering a portion of an airbag module, having an inflatable cushion that is positioned to deploy through the deployable door defined by the tear seams/seam of the cover/instrument panel. The pressure of the inflating cushion will cause the deployable door to pivot open while tearing along the tear seams positioned in a portion of cover in order to provide an opening for the inflatable cushion to deploy therethrough while a portion of the deployable door is still pivotally secured to the cover instrument panel.

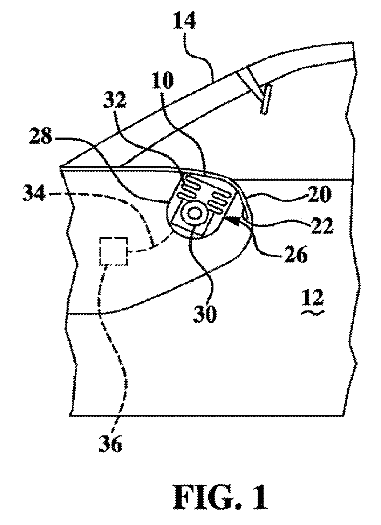

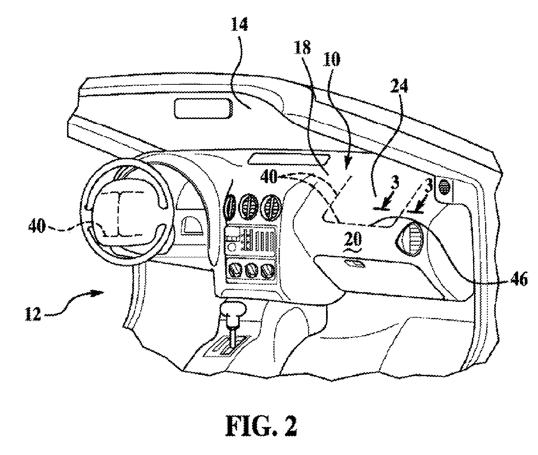

Referring now to Figures 1-2, an instrument panel is generally indicated at 10. The instrument panel 10 is assembled into a vehicle passenger compartment 12 partially shown in Figure 2. The instrument panel is generally disposed beneath a windshield 14 and extends across substantially the entire width of the passenger compartment 12.

In accordance with various exemplary embodiments of the present invention and as will be described in greater detail hereinafter, the instrument panel 10 comprises a covering layer or outer layer 18; an intermediary layer 43; and any substrate layer 45 wherein the instrument panel has an outer show surface 20 and an inner surface 22. The instrument panel further comprises a deployment door 24 formed therein. The deployment door is intended to be in the general area corresponding to a passenger side airbag module 26. Accordingly, the passenger side airbag module is located and deployed therethrough during actuation of the passenger side airbag module under predetermined deployment conditions.

Airbag module 26 further comprises a housing 28, an inflator 30 and an inflatable cushion 32 wherein the inflator inflates the inflatable cushion in response to a signal 34 received from a sensing or control module 36 configured to determine if an activation event is occurring. As is known in the related arts, the control module receives signals from a plurality of sensors disposed throughout the vehicle.

In accordance with various embodiments of the present invention, the instrument panel is formed from a plurality of layers each comprising any one of a number of suitable materials or combinations thereof. In one embodiment, the instrument panel is formed from thermoplastic and thermoset materials.

For example, suitable thermoplastic materials include but are not limited to polyethylene based polyolefin elastomer or polypropylene based thermoplastic elastomer, poly-urethane resins and other co-polymers and equivalents thereof. Non-limiting examples include; thermoplastic elastic olefin (TEO), thermoplastic elastomer (TPE), thermoplastic elastomer - oefinic (TPE-O, TPO), thermoplastic elastomer - styrenic (TPE-S), Polycarbonate (PC), Polycarbonate/Acrylonitrile-Butadiene-Styrene (PC/ABS), Acrylonitrile-Butadiene-Styrene (ABS) copolymers, Poly-urethane (TPU) and Polyvinyl-Chloride (PVC).

Non-limiting examples of thermosets include but are not limited to polyamide, polybutadiene, polyether block amide (PEBA), polyetherimide, polyimide, polyurea, polyurethane (PUR), silicone, vinyl ester, phenolic, melamine, urea formaldehyde resins, Fluropolymers such as polytetrafluorethylene (PTFE) and polyvinylidene fluoride (PVDF).

Preferred materials are those materials that have the desired characteristics of strength, durability, flexibility, and finished appearance and feel for use as an instrument panel 10 or a cover for a driver's side airbag module. As illustrated, the instrument panel comprises a plurality of layers such as an outer surface, an inner foam layer and a lower substrate layer.

It is, of course, understood that the passenger side airbag module and the configuration of the instrument panel illustrated in Figures 1 and 2 are provided as examples and various other configurations of the instrument panel and the airbag module are contemplated thus, the present invention is not intended to be limited to the specific configurations illustrated in Figures 1 and 2.

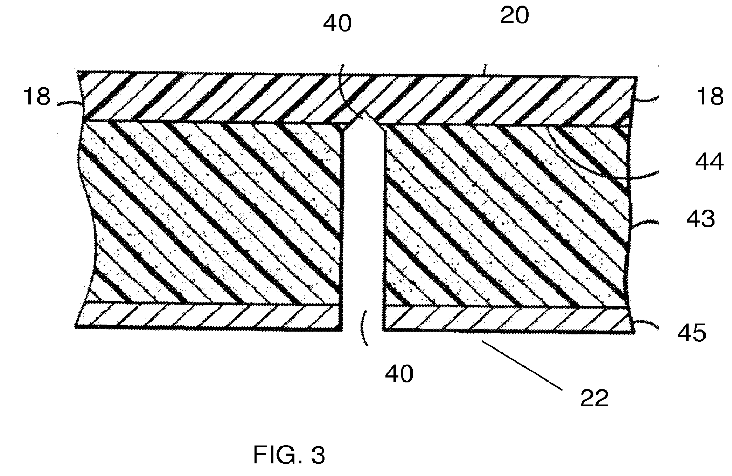

The instrument panel has an interior show surface 20 that is intended to include the surface of the instrument panel that is exposed to the vehicle interior and its occupants. Thus, a sheet of material having a show surface or an outer aesthetically pleasing appearance is provided. In accordance with an exemplary embodiment, the same sheet or instrument panel also provides a portion of a cover for an airbag module. Referring now to FIGS. 1-3, the instrument panel and/or cover of the airbag module is formed with a tear seam 40. The instrument panel/cover has an outer layer 18 having show surface 20 and an inner surface 44. The instrument panel/cover also has an intermediary foam layer 43 and a substrate layer 45. The combination of the outer layer 18, foam layer 43 and substrate layer 45 when separated from the remaining portions of the instrument panel along the tear seam 40 define a deployment door opening 46 in the cover/instrument panel.

The tear seam extends into the cover/instrument panel from the substrate layer 45, into the foam layer 43 and partially into the inner surface 44 of the outer layer 18 however the tear seam does not extend all the way through to the outer layer 18. Thus, and when the cover is installed in the vehicle the tear seam is not visible through the show surface.

Referring now to FIGS. 4-6, methods of forming the instrument panel partially in accordance with embodiments of the present invention are illustrated schematically. One concept involves vacuum forming a skin/foam bi-laminate 50 (e.g., layers 18 and 43) to the retainer substrate (e.g., layer 45) without any adhesive in place via a male vacuum cladding or female vacuum cladding/press bonding process. Upon cooling, the formed bi-laminate 50 is removed from the substrate 45 and sonically scored to provide accurate and repeatable score depth over the entire tear seam length. Concurrently, the retainer substrate is scored independently via laser, router or water jet or any other suitable process. After the independent scoring of each part 45 and 50, the fixtured skin/foam and retainer components are coated with an adhesive and subsequently placed into an oven for solvent/water deflash. After deflash, the parts are reassembled, reheated to activate the adhesive and subsequently bonded under pressure (i.e. bladder, vacuum bagging, etc.).

In an alternative concept, a part is female vacuum formed and pressure laminated in one step (commonly referred to as "press bonding"). However, instead of attempting to laser score through the entire retainer substrate/foam/skin construction (e.g., layers 18, 43 and 45), the part is scored in a two-step process to ensure cut depth accuracy and repeatability. In the first step, a router scores the retainer material (layer 45) along the length of the entire tear seam, leaving only intermittent bridges at predetermined points along the path to provide support for external loading from the A-side or show surface of the door opening. The second step consists of a sonic knife scoring the foam and skin materials through the opening in the substrate provided by the router. The retainer is fixtured for both router and sonic scoring, preferably in the same fixture to ensure proper router and sonic score path alignment.

In both concepts, the foam and skin layer scoring occurs independently of the substrate scoring which enables the use of robust mechanical scoring process technology, such as sonic scoring.

As illustrated in FIG. 4, a bi-laminate sheet 50 comprising the foam layer 43 and the outer layer 18 are provided to a press 52 wherein the bi-laminate sheet 50 is applied to a previously molded substrate layer 45 disposed in the press 52. During a first step, the bi-laminate sheet 50 is vacuum formed to a first shell portion 54 of the press by applying a vacuum force in the direction of the arrow 56. Thereafter, the ends of the outer layer of the bi-laminate sheet are wrapped around peripheral edges of the substrate 45 via a vacuum force applied to a second shell portion 58 of the press 52 in the direction of the arrow 60.

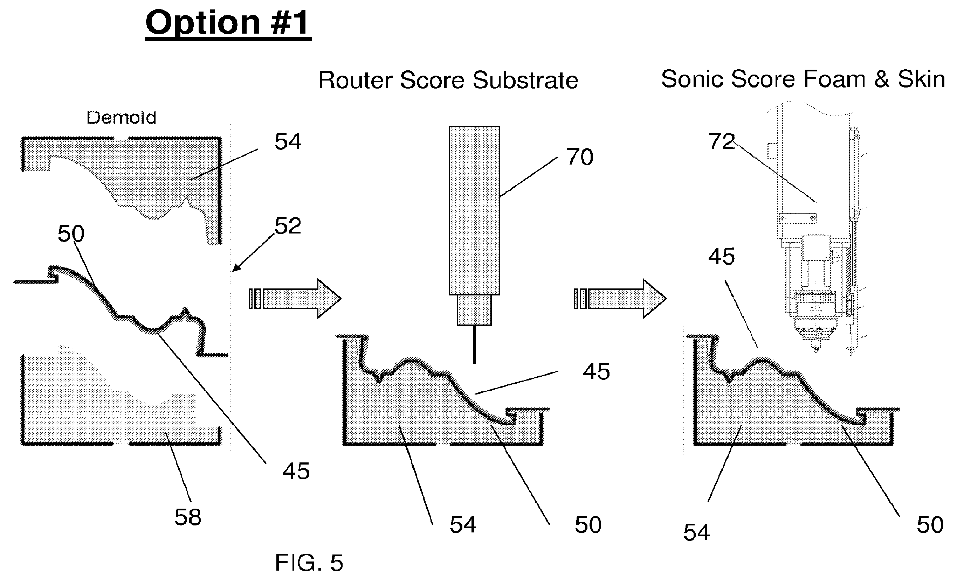

Thereafter, shell portions 54 and 58 are separated and the instrument panel 10 is then further processed to have the tear seams formed therein. In one process and referring now to FIG. 5 representing an alternative to the process according to the present invention, the substrate layer 45 is scored via a laser scoring device or equivalent thereof 70 that scores only substrate layer 45. By separately scoring the substrate 45 and the bi-laminate layer 50 the aforementioned issues with laser light absorption are no longer a factor.

Thereafter, a second scoring device such as an ultrasonic knife 72 scorers the inner foam layer 43 and a portion of outer layer 18 such that tear seam 40 is formed in each panel 10. It is understood that in FIG. 5 and after the demolding process, that instrument panel is inverted, repositioned or initially positioned such that it is scored from surface 22 towards and into but not through outer layer 18.

In an alternative process and referring now to FIG. 6, at the demold step the bi-laminate layer 50 comprising the foam layer 43 and outer layer 18 are advanced to a separate die wherein an ultrasonic knife 72 scores the tear seam in layer 43 and outer layer 18 and substrate layer 45 is advanced to another die wherein a router or laser scores the substrate to form a corresponding tear seam portion in substrate layer 45. Thereafter, the previously scored bi-laminate layer 50 and substrate layer 45 are returned to press 52 and are secured to each other.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the present application as defined by the claims.

## Claims

1. A method of forming a hidden, integral airbag door (24) in an instrument panel (10), the method comprising:
molding a substrate layer (45);
molding a bi-laminate layer (50) with an outer surface layer (18) and an intermediary foam layer (43) to the substrate layer (45) after the substrate layer (45) has been molded;
removing the bi-laminate layer (50) from the substrate layer (45);
scoring a tear seam in the bi-laminate layer (50);
separately scoring a tear seam in the substrate layer (45);
aligning the tear seam of the bi-laminate layer (50) with the tear seam of the substrate layer (45); and
securing the bi-laminate layer (50) to the substrate layer (45).

2. The method as in claim 1, wherein the bi-laminate layer (50) is vacuum formed to a preformed substrate layer (45) without any adhesive such that the bi-laminate layer (50) will be formed to the contours of the substrate layer (45) and wherein the bi-laminate layer (50) is removed from the substrate layer (45) after the bi-laminate layer (50) is vacuum formed to the substrate layer (45).

3. The method as in claim 1 or 2, wherein the tear seam of the substrate layer (45) is an opening that extends along an entire length of the tear seam of the substrate layer (45) and wherein the tear seam of the bi-laminate layer (50) is a score in the intermediary foam layer (43) and the outer layer (18) that is provided in localized areas of the tear seam of the bi-laminate layer (50), wherein the score does not extend through the outer layer (18).

4. The method as in claims 1-3, wherein the tear seam of the substrate layer (45) is an opening in the substrate layer (45) formed by a laser scoring.device (70) and the tear seam of the bi-laminate layer (50) is a score in the foam layer and the outer layer that is provided in localized areas of the tear seam of the bi-laminate layer (50), wherein the score does not extend through the outer surface layer.

5. The method as in claim 4, wherein the tear seam of the bi-laminate layer (50) is formed in the bi-laminate layer (50) after the bi-laminate layer (50) is vacuum formed to the substrate layer (45) and removed from the substrate layer (45).

6. The method as in claims 1-5, wherein the tear seam of the bi-laminate layer (50) is formed via a sonic scoring apparatus (72).

7. The method as in claim 6, wherein the sonic scoring apparatus (72) is an ultrasonic knife.

## Patentansprüche

1. Verfahren zum Bilden einer verborgenen, in einem Armaturenbrett (10) verbauten Airbag-Tür (24), wobei das Verfahren folgendes umfasst:
Gießen einer Substratschicht (45);
Gießen einer Bi-Laminat-Schicht (50) mit einer Außenflächenschicht (18) und einer Zwischenschicht aus Schaumstoff (43) auf der Substratschicht (45), nachdem die Substratschicht (45) gegossen worden ist;
Abnehmen der Bi-Laminat-Schicht (50) von der Substratschicht (45);
Ritzen einer Reißnaht in die Bi-Laminat-Schicht (50);
Getrennt davon, Ritzen einer Reißnaht in die Substratschicht (45);
Fluchten der Reißnaht der Bi-Laminat-Schicht (50) mit der Reißnaht der Substratschicht (45); und
Sichern der Bi-Laminat-Schicht (50) auf der Substratschicht (45).

2. Verfahren nach Anspruch 1, wobei die Bi-Laminat-Schicht (50) auf einer vorgeformten Substratschicht (45) ohne Klebstoff vakuumgeformt wird, sodass die Bi-Laminat-Schicht (50) entsprechend den Konturen der Substratschicht (45) gebildet wird, und wobei die Bi-Laminat-Schicht (50) von der Substratschicht (45) abgenommen wird, nachdem die Bi-Laminat-Schicht (50) entsprechend der Substratschicht (45) vakuumgeformt worden ist.

3. Verfahren nach Anspruch 1 oder 2, wobei die Reißnaht der Substratschicht (45) eine Öffnung ist, die sich entlang einer gesamten Länge der Reißnaht der Substratschicht (45) erstreckt, und wobei die Reißnaht der Bi-Laminat-Schicht (50) ein Einschnitt in der Zwischenschicht aus Schaumstoff (43) und der Außenschicht (18) ist, die in bestimmten Bereichen der Reißnaht der Bi-Laminat-Schicht (50) vorhanden ist, wobei sich der Einschnitt nicht durch die Außenschicht (18) hindurch erstreckt.

4. Verfahren nach den Ansprüchen 1 bis 3, wobei die Reißnaht der Substratschicht (45) eine Öffnung in der Substratschicht (45) ist, die durch eine Laserritzvorrichtung (70) gebildet wird, und die Reißnaht der Bi-Laminat-Schicht (50) ein Einschnitt in der Schaumstoffschicht und der Außenschicht ist, die in bestimmten Bereichen der Reißnaht der Bi-Laminat-Schicht (50) vorhanden ist, wobei sich der Einschnitt nicht durch die Außenflächenschicht hindurch erstreckt.

5. Verfahren nach Anspruch 4, wobei die Reißnaht der Bi-Laminat-Schicht (50) in der Bi-Laminat-Schicht (50) gebildet wird, nachdem die Bi-Laminat-Schicht (50) entsprechend der Substratschicht (45) vakuumgeformt worden ist, und von der Substratschicht (45) abgenommen worden ist.

6. Verfahren nach den Ansprüchen 1 bis 5, wobei die Reißnaht der Bi-Laminat-Schicht (50) durch eine Schallritzvorrichtung (72) gebildet wird.

7. Verfahren nach Anspruch 6, wobei die Schallritzvorrichtung (72) ein Ultraschallmesser ist.

## Revendications

1. Procédé de formation d'une porte de coussin gonflable de sécurité cachée, intégrée (24) dans un tableau de bord (10), le procédé comprenant le fait :
de mouler une couche de substrat (45) ;
de mouler une couche de bi-stratifié (50) avec une couche de surface externe (18) et une couche de mousse intermédiaire (43) sur la couche de substrat (45) après que la couche de substrat (45) a été moulée ;
de retirer la couche de bi-stratifié (50) de la couche de substrat (45) ;
de marquer une ligne de déchirure dans la couche de bi-stratifié (50) ;
de marquer séparément une ligne de déchirure dans la couche de substrat (45) ;
d'aligner la ligne de déchirure de la couche de bi-stratifié (50) avec la ligne de déchirure de la couche de substrat (45) ; et
de fixer la couche de bi-stratifié (50) à la couche de substrat (45).

2. Procédé selon la revendication 1, dans lequel la couche de bi-stratifié (50) est formée sous vide sur une couche de substrat préformée (45) sans aucun adhésif de sorte que la couche de bi-stratifié (50) soit formée sur les contours de la couche de substrat (45) et dans lequel la couche de bi-stratifié (50) est retirée de la couche de substrat (45) après que la couche de bi-stratifié (50) est formée sous vide sur la couche de substrat (45).

3. Procédé selon la revendication 1 ou 2, dans lequel la ligne de déchirure de la couche de substrat (45) est une ouverture qui s'étend sur toute la longueur de la ligne de déchirure de la couche de substrat (45) et dans lequel la ligne de déchirure de la couche de bi-stratifié (50) est une pré-incision dans la couche de mousse intermédiaire (43) et la couche externe (18) qui est prévue dans des zones localisées de la ligne de déchirure de la couche de bi-stratifié (50), où la pré-incision ne s'étend pas à travers la couche externe (18).

4. Procédé selon les revendications 1 à 3, dans lequel la ligne de déchirure de la couche de substrat (45) est une ouverture dans la couche de substrat (45) formée par un dispositif de pré-incision au laser (70) et la ligne de déchirure de la couche de bi-stratifié (50) est une pré-incision dans la couche de mousse et la couche externe qui est prévue dans des zones localisées de la ligne de déchirure de la couche de bi-stratifié (50), où la pré-incision ne s'étend pas à travers la couche de surface externe.

5. Procédé selon la revendication 4, dans lequel la ligne de déchirure de la couche de bi-stratifié (50) est formée dans la couche de bi-stratifié (50) après que la couche de bi-stratifié (50) est formée sous vide sur la couche de substrat (45) et retirée de la couche de substrat (45).

6. Procédé selon les revendications 1 à 5, dans lequel la ligne de déchirure de la couche de bi-stratifié (50) est formée par un appareil de pré-incision sonique (72).

7. Procédé selon la revendication 6, dans lequel l'appareil de pré-incision sonique (72) est un couteau à ultrasons.
